# EUROPEAN PATENT APPLICATION

(11) **EP 2 072 394 A2**
(43) Date of publication of application: **24.06.2009**
(21) Application number: 08171017.0
(22) Date of filing: 08.12.2008
(51) Int. Cl.: B64C 13/12, B64C 25/44, B64C 27/56

(54) **Aircraft flight control user interface fluid linkage system**

(30) Priority: 19.12.2007 US 960326
(71) Applicant: Honeywell International Inc., Morristown, NJ 07962 (US)
(72) Inventor: Christensen, Donald J., Morristown, NJ 07962-2245 (US); Hanlon, James Casey, Morristown, NJ 07962-2245 (US)
(74) Representative: Buckley, Guy Julian

(57) **Abstract**

A user interface fluid linkage system includes first (102) and second (104) user interfaces that are linked by a single, constant volume fluid line (110). The system includes identically configured, but oppositely mounted hydraulic fluid chambers (106) to link motion between the first and second user interfaces.

## Description

### TECHNICAL FIELD

The present invention relates to aircraft user interfaces and, more particularly, to a system that fluidly links aircraft flight control system user interfaces.

### BACKGROUND

Aircraft typically include a plurality of flight control surfaces that, when controllably positioned, guide the movement of the aircraft from one destination to another. The number and type of flight control surfaces included in an aircraft may vary, but typically include both primary flight control surfaces and secondary flight control surfaces. The primary flight control surfaces are those that are used to control aircraft movement in the pitch, yaw, and roll axes, and the secondary flight control surfaces are those that are used to influence the lift or drag (or both) of the aircraft. Although some aircraft may include additional control surfaces, the primary flight control surfaces typically include a pair of elevators, a rudder, and a pair of ailerons, and the secondary flight control surfaces typically include a plurality of flaps, slats, and spoilers.

The positions of the aircraft flight control surfaces are typically controlled using a flight control surface actuation system. The flight control surface actuation system, in response to position commands that originate from either the flight crew or an aircraft autopilot, moves the aircraft flight control surfaces to the commanded positions. For example, during flight the pilot or co-pilot may position the primary flight control surfaces via one or more pilot or co-pilot user interfaces such as, for example, pilot and co-pilot yokes or control sticks, and pairs of pilot and co-pilot foot pedals. In particular, the pilot or co-pilot may control the position of the elevators, and thus aircraft pitch, by moving the pilot or co-pilot yoke or control stick in a relatively forward or rearward direction. The pilot or co-pilot may control the positions of the ailerons, and thus aircraft roll, by moving (or rotating) the pilot or co-pilot yoke or control stick in the left or right direction (or in the clockwise or counterclockwise direction). Moreover, the pilot or co-pilot may control the position of the rudder, and thus aircraft yaw, by translating a pair of right and left pilot or co-pilot rudder pedals using their right or left foot. It is further noted that in addition to being used to position the rudder, the pilot or co-pilot may also apply the brakes to the landing gear wheels by rotating a pilot or co-pilot brake pedal that may be integral with the rudder pedals.

Preferably, the pilot and co-pilot user interfaces described above are somehow linked so that when a pilot user interface is moved the corresponding co-pilot user interface moves at least substantially identically. For example, if the pilot moves the pilot control stick or pilot brake pedal, then the co-pilot control stick or co-pilot brake pedal will move at least substantially identically. There may be several benefits to linking the pilot and co-pilot user interfaces. One benefit is that the situational awareness of the flight crew is increased. That is, the pilot and co-pilot may each be able to closely monitor what the other is doing. Thus, in the highly unlikely event that one of them improperly positions their user interface, the other will be able to quickly recognize and correct this situation. Linking the pilot and co-pilot user interfaces can also be beneficial for pilot training.

Presently, pilot and co-pilot user interfaces are linked either mechanically, hydraulically, or electrically. The mechanical linkage systems and hydraulic linkage systems are typically rather complex and use significant numbers of components, which can undesirably increase overall system cost and weight, and concomitantly reduces system reliability. The electrical linkage systems, too, can be somewhat complex, which can also lead to increased system costs.

Hence, there is a need for a system that links user interfaces, such as those used in aircraft flight control systems, that is relatively less complex, relatively less costly, and relatively more reliable, than current systems. The present invention addresses at least this need.

### BRIEF SUMMARY

In one exemplary embodiment, a user interface fluid linkage system includes a first user interface, a second user interface, a first user interface fluid chamber, a second user interface fluid chamber, and a single fluid line. The first user interface is configured to rotate at least partially around a first axis in either a first direction or a second direction. The second user interface is configured to rotate at least partially around the first axis in either the first direction or the second direction. The first user interface fluid chamber is coupled to the first user interface and includes a variable hydraulic fluid volume that varies at least in response to rotation of the first user interface around the first axis. The second user interface fluid chamber is coupled to the second user interface and includes a variable hydraulic fluid volume that varies at least in response to rotation of the second user interface around the first axis. The single fluid line is a constant volume fluid line that fluidly communicates the first user interface variable hydraulic fluid volume and the second user interface variable hydraulic fluid volume. The first and second user interface chambers are configured such that when the first user interface variable fluid volume increases, the second user interface variable fluid volume decreases, and when the second user interface variable fluid volume increases, the first user interface variable fluid volume decreases.

In another exemplary embodiment, a user interface fluid linkage system includes a first user interface, a second user interface, a first user interface fluid chamber, a second user interface fluid chamber, and a single fluid line. The first user interface is configured to rotate at least partially around a first axis in either a first direction or a second direction. The second user interface is configured to rotate at least partially around the first axis in either the first direction or the second direction. The first user interface fluid chamber is coupled to the first user interface and includes a variable hydraulic fluid volume that varies at least in response to rotation of the first user interface around the first axis. The second user interface fluid chamber is coupled to the second user interface and includes a variable hydraulic fluid volume that varies at least in response to rotation of the second user interface around the first axis. The single fluid line is a constant volume fluid line that fluidly communicates the first user interface variable hydraulic fluid volume and the second user interface variable hydraulic fluid volume. The first and second user interface fluid chambers each include a first mechanism, a second mechanism, and a bellows. The first mechanism has an inner surface, an outer surface, and a pair of slots formed between the inner and outer surfaces. The inner surface defines a first inner volume, and the outer surface has a pair of first mount structures extending therefrom. The second mechanism is disposed at least partially within the first inner volume, and is movable relative to the first mechanism. The second mechanism has an inner surface and an outer surface. The inner surface defines a second inner volume, and the outer surface has a pair of second mount structures extending therefrom and within the pair of slots. The bellows is disposed within the first and second inner volumes and is coupled between the first mechanism inner surface and the second mechanism inner surface. The bellows has an inner surface that defines the variable fluid volume.

In yet a further exemplary embodiment, a user interface fluid linkage system includes a first user interface, a second user interface, a first user interface fluid chamber, a second user interface fluid chamber, and a single fluid line. The first user interface is configured to rotate at least partially around a first axis in either a first direction or a second direction. The second user interface is configured to rotate at least partially around the first axis in either the first direction or the second direction. The first user interface fluid chamber is coupled to the first user interface and includes a variable hydraulic fluid volume that varies at least in response to rotation of the first user interface around the first axis. The second user interface fluid chamber is coupled to the second user interface and includes a variable hydraulic fluid volume that varies at least in response to rotation of the second user interface around the first axis. The single fluid line is a constant volume fluid line that fluidly communicates the first user interface variable hydraulic fluid volume and the second user interface variable hydraulic fluid volume. The first and second user interface fluid chambers each include a first mechanism, a second mechanism, and a bellows. The first mechanism has an inner surface, an outer surface, and a pair of slots formed between the inner and outer surfaces. The inner surface defines a first inner volume, and the outer surface has a pair of first mount structures extending therefrom. The second mechanism is disposed at least partially within the first inner volume, and is movable relative to the first mechanism. The second mechanism has an inner surface and an outer surface. The inner surface defines a second inner volume, and the outer surface has a pair of second mount structures extending therefrom and within the pair of slots. The bellows is disposed within the first and second inner volumes and is coupled between the first mechanism inner surface and the second mechanism inner surface. The bellows has an inner surface that defines the variable fluid volume. The first mount structures of the first user interface fluid chamber are each coupled to the first user interface, the second mount structures of the first user interface fluid chamber are each fixedly coupled relative to the first user interface, the first mount structures of the second user interface fluid chamber are each fixedly coupled relative to the second user interface, and the second mount structures of the second user interface fluid chamber are each coupled to the second user interface.

Furthermore, other desirable features and characteristics of the preferred aircraft flight control system user interface linkage system will become apparent from the subsequent detailed description and the appended claims, taken in conjunction with the accompanying drawings.

### BRIEF DESCRIPTION OF THE DRAWINGS

The present invention will hereinafter be described in conjunction with the following drawing figures, wherein like numerals denote like elements, and wherein:

FIG. 1 is a simplified representation of an exemplary embodiment of a user interface fluid linkage system;

FIGS. 2 and 3 are close-up views of portions of the exemplary user interface linkage system of FIG. 1;

FIG. 4 is a plan view of an exemplary hydraulic fluid chamber that may be used to implement the system of FIG. 1; and

FIGS. 5 and 6 are cross section views of the exemplary hydraulic fluid chamber taken along lines 5-5 and 6-6, respectively, in FIG. 4.

### DETAILED DESCRIPTION

The following detailed description is merely exemplary in nature and is not intended to limit the invention or the application and uses of the invention. Furthermore, there is no intention to be bound by any theory presented in the preceding background or the following detailed description. In this regard, although much of the following description is directed to aircraft flight control user interfaces, it will be appreciated that the described system may also be implemented, for example, in aircraft flight simulators, for refueling booms, and/or nose wheel steering. Moreover, the invention may be implemented in both fixed-wing aircraft and rotary-wing aircraft.

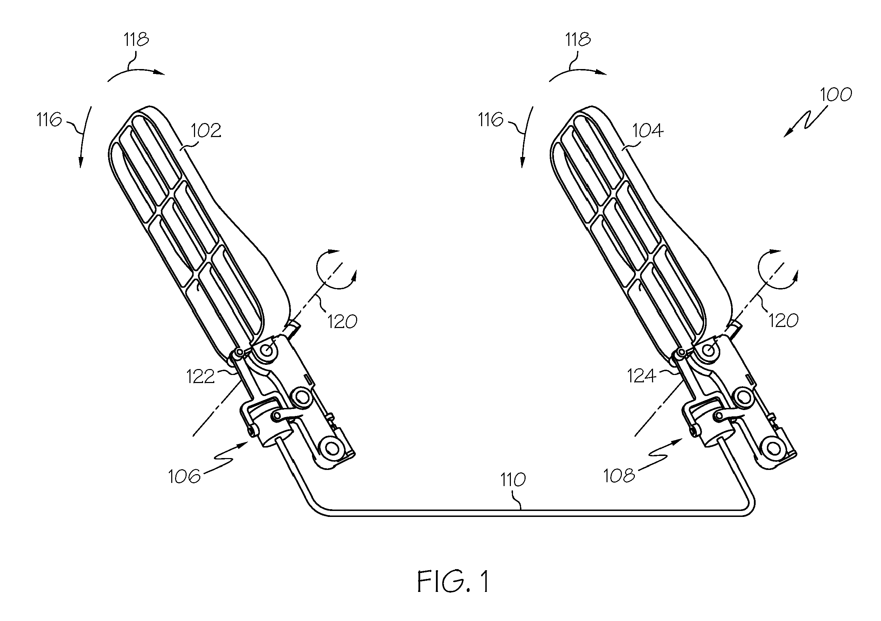

Turning now to FIG. 1, a schematic representation of an exemplary embodiment of a user interface fluid linkage system 100 is depicted and includes a first user interface 102, a second user interface 104, a first user interface fluid chamber 106, and a second user interface fluid chamber 108. In the depicted embodiment, the first and second user interfaces 102, 104 are each configured to rotate at least partially, in both a first direction 116 and a second direction 118, around a first axis 120. More specifically, each user interface 102, 104 is responsive to an input force, which may be supplied from a user, to rotate in either the first or second direction 116, 118. Moreover, and as will be described in more detail further below, when an input force is supplied to the first or second user interface 102, 104 that causes it to rotate in either the first or second direction 116, 118, the system 100 is configured such that the second or first user interface 104, 102, respectively, will concomitantly be caused to rotate in the first or second direction 116, 118. To implement this latter functionality, the first and second user interfaces 102, 104 are hydraulically linked via a single, constant volume hydraulic fluid line 110.

Before proceeding further it is noted that in the embodiment depicted in FIG. 1, the user interfaces 102, 104 are implemented as linked pilot and co-pilot brake pedals that are configured to rotate only about the first axis 120. In other embodiments, however, the user interfaces 102, 104 may be configured to rotate about two (or more) axes. It may thus be appreciated that the embodiment of FIG. 1 may be used to implement, for example, linked pilot and co-pilot brake pedals.

Returning once again to the description, it may be seen that the first user interface fluid chamber 106 is coupled to the first user interface 102, and the second user interface fluid chamber 108 is coupled to the second user interface 104. The first and second user interface fluid chambers 106, 108 each include a variable hydraulic fluid volume (not depicted in FIG. 1) that are in fluid communication with each other via the hydraulic fluid line 110. More specifically, and as will be described in more detail further below, the first user interface fluid chamber 106 includes a first user interface variable hydraulic fluid volume that varies at least in response to rotation of the first user interface 102 around the first axis 120, and the second user interface fluid chamber 108 includes a second user interface variable hydraulic fluid volume that varies at least in response to rotation of the second user interface 104 around the first axis 120. As will also be described further below, the first and second user interface variable hydraulic fluid volumes will also vary, at least indirectly, in response to rotation of the second and first user interfaces 102, 104, respectively, around the first axis 120.

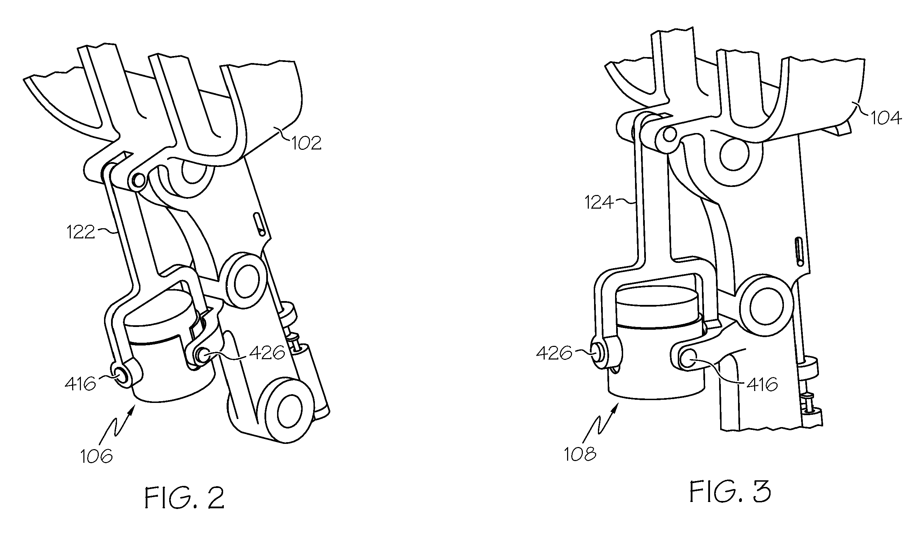

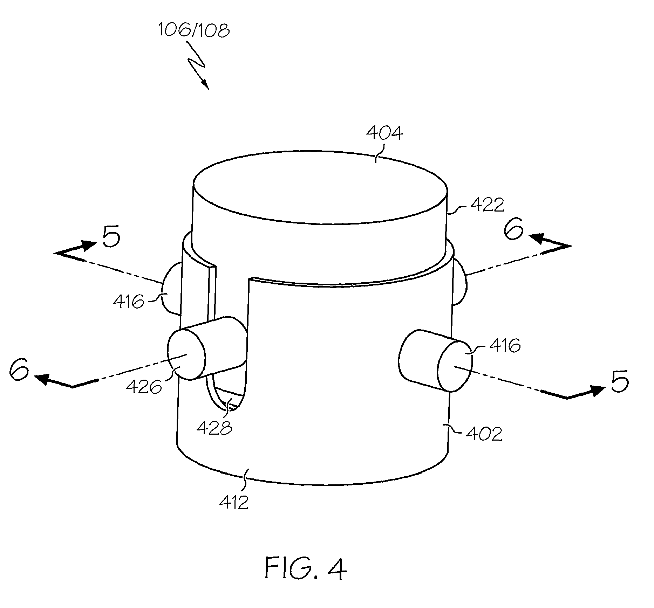

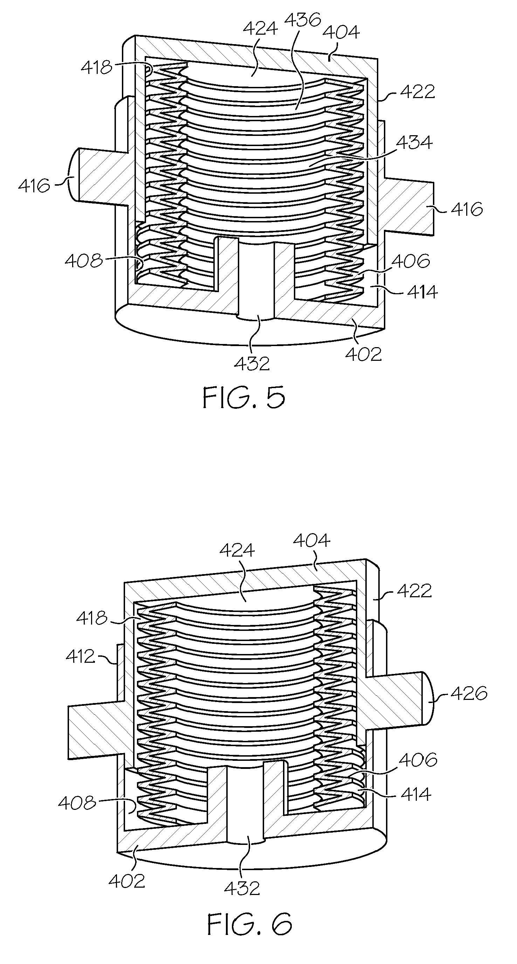

The first and second user interface fluid chambers 106, 108 are structurally identical. However, as depicted in FIGS. 2 and 3 respectively, the first fluid chamber 106 and the second fluid chamber 108 are oppositely mounted relative to the first user interface 102 and the second user interface, respectively. The result of this will become more apparent from the following description of an exemplary embodiment of a configuration that may be used to implement the first and second user interface fluid chambers 106, 108. The exemplary device is depicted in FIGS. 4-6, to which reference should now be made.

Although the first and second user interface fluid chambers 106, 108 may be variously configured, in the depicted embodiment each includes a first mechanism 402, a second mechanism 404, and a bellows 406. The first mechanism 402 includes an inner surface 408 and an outer surface 412. The first mechanism inner surface 408 defines a first inner volume 414, and a pair of first mount structures 416 extends from the first mechanism outer surface 412. As is depicted mostly clearly in FIG. 4, the first mechanism 402 further includes a pair of slots 428 (only one depicted in FIG. 4) and a fluid port 432. Each slot 428 is formed in the first mechanism 402 and extends between the first mechanism inner and outer surfaces 408, 412.

The second mechanism 404 is disposed, preferably only partially, within the first inner volume 414, and also includes an inner surface 418 and an outer surface 422. In a manner similar to the first mechanism 402, the second mechanism inner surface 418 defines a second inner volume 424, and a pair of second mount structures 426 extends from the second mechanism outer surface 422. More specifically, the each of the second mount structures 426 extends through one of the slots 428 formed in the first mechanism 402.

The bellows 406, which may also be variously configured, is disposed within the first and second inner volumes 414, 424 and is coupled between the first mechanism inner surface 408 and the second mechanism inner surface 418. The bellows 406 includes an inner surface 434 that defines the variable hydraulic fluid volume 436. The variable hydraulic fluid volume 436 is in fluid communication with the above-mentioned fluid port 432. It may thus be appreciated that the variable volume fluid chamber 436 is in fluid communication with the fluid line 110 via the fluid port 432.

Returning now to FIGS. 1-3, it is seen that in the depicted configuration the first user interface 102 is coupled, via a first connection link 122, to the first mount structures 416 of the first fluid chamber 106, and the second user interface 104 is coupled, via a second connection link 124, to the second mount structures 426 of the second fluid chamber 108. Moreover, the second mount structures 426 of the first user interface fluid chamber 106 are each fixedly coupled relative to the first user interface 102, and the first mount structures 416 of the second user interface fluid chamber 108 are each fixedly coupled relative to the second user interface 104.

With the above described configuration, it may be appreciated that if the first user interface 102 is rotated in the first direction 116, then the first user interface variable hydraulic fluid volume 436 will increase. As a result, hydraulic fluid will be drawn into the first user interface fluid chamber 106 and displaced from the second user interface fluid chamber 108, via the hydraulic line 110. The hydraulic fluid displaced from the second user interface fluid chamber 108 will in turn cause the second user interface variable hydraulic fluid volume 436 to decrease. The decrease in the second user interface variable hydraulic fluid volume 436 causes the second user interface 104 to be concomitantly rotated in the first direction 116. Conversely, if the first user interface 102 is rotated in the second direction 118, then the first user interface variable hydraulic fluid volume 436 will decrease. As a result, hydraulic fluid will be displaced from the first user interface fluid chamber 106 and directed into the second user interface fluid chamber 108, via the hydraulic line 110. The hydraulic fluid directed into the second user interface fluid chamber 108 will in turn cause the second user interface variable hydraulic fluid volume 436 to increase. The increase in the second user interface variable hydraulic fluid volume 436 causes the second user interface 104 to be concomitantly rotated in the second direction 118. It is noted that rotation of the second user interface 104 in either the first or second direction 116, 118 would similarly effect movement of the first user interface 102. This is readily apparent to the skilled artisan, and thus this operation is not described in detail.

The operation of the system 100 in which the user interfaces 102, 104 are configured to rotate about a plurality of axes is substantially identical to the single axis system described above. As such, a detailed description of its operation is not provided.

The user interface fluid linkage system 100 described herein fluidly links user interfaces 102, 104, such as those used in aircraft flight control systems, via identically configured but oppositely mounted user interface fluid chambers, and via a single, constant volume fluid line. The system 100 is relatively less complex, relatively less costly, and relatively more reliable, than current systems.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A user interface fluid linkage system (100), comprising:
a first user interface (102) configured to rotate at least partially around a first axis (120) in either a first direction (116) or a second direction (118);
a second user interface (104) configured to rotate at least partially around the first axis (120) in either the first direction (116) or the second direction (118);
a first user interface fluid chamber (106) coupled to the first user interface (102) and including a variable hydraulic fluid volume that varies at least in response to rotation of the first user interface (102) around the first axis (120);
a second user interface fluid chamber (108) coupled to the second user interface (104) and including a variable hydraulic fluid volume that varies at least in response to rotation of the second user interface (104) around the first axis (120); and
a single, constant volume fluid line (110) fluidly communicating the first user interface variable hydraulic fluid volume and the second user interface variable hydraulic fluid volume,
wherein the first and second user interface (104) chambers are configured such that:
when the first user interface variable fluid volume increases, the second user interface variable fluid volume decreases, and
when the second user interface variable fluid volume increases, the first user interface variable fluid volume decreases.

2. The system of Claim 1, wherein the first user interface and the first user interface variable hydraulic fluid volume (436) are configured such that:
rotation of the first user interface (102) in the first direction (116) causes the first user interface variable hydraulic fluid volume to increase;
rotation of the first user interface (102) in the second direction (118) causes the first user interface variable hydraulic fluid volume to decrease;
an increase in the first user interface variable hydraulic fluid volume causes the first user interface (102) to rotate in the first direction (116); and
a decrease in the first user interface variable hydraulic fluid volume causes the first user interface (102) to rotate in the second direction (118).

3. The system of Claim 2, wherein the second user interface (104) and the second user interface variable hydraulic fluid volume are configured such that:
rotation of the second user interface (104) in the first direction (116) causes the second user interface variable hydraulic fluid volume to decrease;
rotation of the second user interface (104) in the second direction (118) causes the second user interface variable hydraulic fluid volume to increase;
an increase in the second user interface variable hydraulic fluid volume causes the second user interface (104) to rotate in the second direction (118); and
a decrease in the second user interface variable hydraulic fluid volume causes the second user interface (104) to rotate in the first direction (116).

4. The system of Claim 3, wherein:
rotation of the first user interface (102) in the first direction (116) causes the first user interface variable hydraulic fluid volume to decrease and discharge fluid therefrom and into the second user interface (104) hydraulic fluid volume, via the single, constant volume fluid line (110), whereby the second user interface variable hydraulic fluid volume increases and rotates the second user interface (104) in the first direction (116); and
rotation of the first user interface (102) in the second direction (118) causes the first user interface variable hydraulic fluid volume to increase and draw fluid therein from the second user interface variable hydraulic fluid volume, via the single, constant volume fluid line (110), whereby the second user interface variable hydraulic fluid volume decreases and rotates the second user interface (104) in the second direction (118).

5. The system of Claim 3, wherein:
rotation of the second user interface (104) in the first direction (116) causes the second user interface variable hydraulic variable fluid volume to increase and draw fluid therein from and the first user interface variable hydraulic fluid volume, via the single, constant volume fluid line (110), whereby the first user interface variable hydraulic fluid volume decreases and rotates the first user interface (102) in the first direction (116); and
rotation of the second user interface (104) in the second direction (118) causes the second user interface variable hydraulic fluid volume to decrease and discharge fluid therefrom and into the first user interface variable hydraulic fluid volume, via the single, constant volume fluid line (110), whereby the first user interface variable hydraulic fluid volume decreases and rotates the first user interface (102) in the second direction (118).

6. The system of Claim 1, wherein the first and second user interface fluid chambers (106, 108) each comprise:
a first mechanism (402) having an inner surface (408) that defines a first inner volume (414);
a second mechanism (404) having an inner surface (418) that defines a second inner volume (424), the second mechanism (404) disposed at least partially within the first inner volume (414), and movable relative to the first mechanism (402); and
a bellows (406) disposed within the first and second inner volumes (414, 424) and coupled between the first mechanism inner surface (408) and the second mechanism inner surface (418), the bellows (406) having an inner surface (434) that defines the variable fluid volume.

7. The system of Claim 6, wherein:
the first mechanism (402) further includes an outer surface (412) having a pair of first mount structures (416) extending therefrom, and a pair of slots (428) formed between the inner and outer surfaces;
the second mechanism (404) further includes an outer surface (4212) having a pair of second mount structures (426) extending therefrom; and
the second mount structures (426) are disposed within the first mechanism slots (428).

8. The system (100) of Claim 7, wherein:
the first mount structures (416) of the first user interface fluid chamber (106) are each coupled to the first user interface (102);
the second mount structures (426) of the first user interface fluid chamber (106) are each fixedly coupled relative to the first user interface (102);
the first mount structures (416) of the second user interface fluid chamber (108) are each fixedly coupled relative to the second user interface (104); and
the second mount structures (426) of the second user interface fluid chamber (108) are each coupled to the second user interface (104).
